# EUROPÄISCHE PATENTSCHRIFT

(11) **EP 2 195 547 B1**
(45) Veröffentlichungstag und Bekanntmachung des Hinweises auf die Patenterteilung: **15.05.2013**
(21) Anmeldenummer: 08803645.4
(22) Anmeldetag: 04.09.2008
(51) Int. Cl.: F16C 33/10, F16C 33/12, F16C 33/14

(54) **BAUTEIL ZUR GLEITENDEN LAGERUNG EINES ANDEREN BAUTEILS UND VERFAHREN ZU DESSEN HERSTELLUNG**
COMPONENT FOR THE SLIDING STORAGE OF ANOTHER COMPONENT, AND METHOD FOR THE PRODUCTION THEREOF
ÉLÉMENT POUR LE MONTAGE GLISSANT D'UN AUTRE ÉLÉMENT, ET SON PROCÉDÉ DE FABRICATION

(30) Priorität: 05.09.2007 DE 102007042382
(43) Veröffentlichungstag der Anmeldung: 16.06.2010
(73) Patentinhaber: Siemens Aktiengesellschaft, 80333 München (DE)
(72) Erfinder: JENSEN, Jens Dahl, 14050 Berlin (DE); KRÜGER, Ursus, 14089 Berlin (DE); SCHIEWE, Heike, 12167 Berlin (DE); SCHNEIDER, Manuela, 13595 Berlin (DE); WINKLER, Gabriele, 13587 Berlin (DE); WALTER, Hartmut, 10961 Berlin (DE)
(86) Internationale Anmeldenummer: PCT/EP2008/061675
(87) Internationale Veröffentlichungsnummer: WO 2009/030722

(56) Entgegenhaltungen:
- EP-A- 1 231 299
- DE-U1-202006 006 813

## Beschreibung

Die Erfindung betrifft ein Bauteil mit einer Gleitfläche, welche für die gleitende Lagerung eines anderen Bauteils vorgesehen ist, wobei das Bauteil zumindest teilweise aus einem Leichtmetallwerkstoff besteht. Die Grenzfläche dieses Leichtmetallwerkstoffes ist auf der der Gleitfläche zugewandten Seite oxidiert und mit zur Grenzfläche offenen Poren versehen. Außerdem ist diese Grenzfläche mit einer Festschmierstoffschicht versehen.

Ein Bauteil mit einer Gleitfläche der eingangs angegebenen Art in Form eines Verbundgleitlagers ist beispielsweise aus der DE 40 38 139 A1 bekannt. Dieses Gleitlager weist eine Stahlstützschicht auf, welche die mechanische Festigkeit des Bauteils gewährleistet. Auf dieser Stahlstützschicht ist eine Aluminiumlegierungsschicht, also eine Schicht aus einem Leichtmetallwerkstoff, aufgebracht, deren Grenzfläche gleichzeitig die Oberfläche der Lagerinnenseite und damit die Gleitfläche für das zu lagernde Bauteil bildet. Die Aluminiumlegierung ist an der Oberfläche in ein Aluminiumoxid umgewandelt worden, was beispielsweise durch Eloxieren geschehen kann. Hierbei entstehen offene Poren in der Grenzfläche, welche mit einem Festschmiermittel imprägniert werden können. Im Betrieb steht das Festschmiermittel damit zur Schmierung des zu lagernden Bauteils zur Verfügung.

Aus dem "Abstract" der JP 05025696-A ist es weiterhin bekannt, dass eine Grenzschicht mit zu diesen offenen Poren aus Aluminiumoxid als Substrat für eine Beschichtung mit einem Festschmierstoff dient. Dieser bildet auf der Grenzschicht dann eine die Gleitfläche für ein zu lagerndes Bauteil bildende weitere Schicht aus, wobei der Festschmierstoff auch in die zur Grenzschicht hin offenen Poren eindringt. Hierdurch wird eine zuverlässige Verankerung der Festschmierstoff-Schicht auf der Grenzschicht erreicht.

Eine wiederum andere Möglichkeit, die Standzeit von Aluminiumverbundlager zu erhöhen, besteht gemäß der DE 37 24 614 A1 darin, dass die Aluminiumoxidschicht mit einem Salz eines Metalls gesättigt werden kann, das einen Komplex mit dem Aluminiumoxid bildet. Dieser erhöht die Festigkeit und Härte sowie die Korrosionsbeständigkeit der Aluminiumoxidschicht. Allerdings hängt die Verbesserung der Standzeit einer solchen Aluminiumoxidschicht wesentlich auch von der Materialbeschaffenheit des gelagerten Bauteils ab.

Auch können gemäß der DE 31 28 412 A1 metallische Lager mit selbstschmierenden Eigenschaften versehen werden, wenn in die Metallmatrix des Lagers, welche Zwischenräume für eine zweite Matrix von funktionellen Zusatzstoffen aufweist, solche Zusatzstoffe eingebracht werden, welche Trockenschmierstoffeigenschaften aufweisen.

Auch kann gemäß der EP 1 273 679 Alauf einer das Bauteil schützenden Hartstoffschicht eine Schicht aus Aluminiumoxid aufgebracht werden, wobei dieses porös ausgeführt ist. In den Poren des Aluminiumoxids können dann beispielsweise Schmierstoffpartikel eingelagert werden. Hierdurch entsteht eine Funktionsschicht, die die Hartstoffschicht bedeckt.

Aus der US 3,206,264 ist es außerdem bekannt, dass mittels einer porösen Oberfläche eines Basisbauteils für Lager die Haftung einer aufgebrachten Schicht durch Vergrößerung der Grenzfläche zwischen diesen beiden Materialien verbessert werden kann, so dass bei thermisch beanspruchten Lagern eine Schichthaftung auch bei unterschiedlichen Wärmeausdehnungskoeffizienten der beiden Bauteilbereiche gewährleistet ist.

Auch gemäß der DE 20 2006 006 813 U1 ist offenbart, dass eine Oberfläche aus anodisch oxidiertem Aluminium mit den dadurch gebildeten Poren zur Aufnahme feinster Partikel eines Trockenschmierstoffes zur Verfügung stehen kann.

Die Aufgabe der Erfindung besteht darin, ein Bauteil mit einer Gleitfläche zur Lagerung eines anderen Bauteils zur Verfügung zu stellen, bei dem Leichtmetallwerkstoffe zum Einsatz kommen und welches gleichzeitig eine vergleichsweise hohe mechanische Festigkeit aufweist.

Diese Aufgabe wird mit dem eingangs angegebenen Bauteil erfindungsgemäß dadurch gelöst, dass die Poren mit einem Hartstoff aufgefüllt sind und auf die Grenzfläche mit den ausgefüllten Poren die Festschmierstoffschicht aus einer Metalllegierung mit einer metallischen Matrix und mit einer in dieser verteilten Gefügephase aus einem Festschmierstoff aufgetragen ist. Durch das Auffüllen der Poren in der Grenzfläche mit einem Hartstoff wird vorteilhafterweise erreicht, dass trotz der Verwendung eines Leichtmetallwerkstoffes mit vergleichsweise geringen Festigkeitswerten die mechanische Festigkeit des Bauteils insgesamt erhöht werden kann. In dem Leichtmetallwerkstoff wird auf diese Weise nämlich in der Nähe der Grenzschicht, in die die Belastungen durch das zu lagernde Bauteil eingeprägt werden, mit einer sehr hohen Festigkeit versehen. Hierzu ist es jedoch notwendig, die durch die Oxidation der Grenzfläche entstandenen Poren mit einem Hartstoff auszufüllen, der sogar noch eine höhere Festigkeit aufweisen kann, als das Oxid des Leichtmetallwerkstoffes.

Die stark erhöhte Festigkeit der Grenzschicht wird jedoch auch mit einer erhöhten Sprödigkeit des grenzschichtnahen Gefüges des oxidierten und gefüllten Leichtmetallwerkstoffes erkauft. Daher ist erfindungsgemäß weiterhin vorgesehen, dass auf das mit Hartstoff gefüllte Oxid des Leichtmetallwerkstoffes eine Festschmierstoffschicht aufgebracht wird, die eine metallische Matrix aufweist. Die metallische Matrix ist vorteilhaft im Vergleich zu dem die Grenzschicht zur Verfügung stellenden Substrat sehr viel duktiler, weswegen durch das zu lagernde Bauteil eingeprägte Belastungen gleichmäßiger auf die durch die Grenzschicht zur Verfügung stehende Fläche verteilt werden können. Hierdurch können Spannungsspitzen abgebaut werden, die zu einem Sprödbruch des oxidierten und mit Hartstoff gefüllten Leichtmetallwerkstoffes führen könnten.

Gleichzeitig ist vorteilhaft die Eigenschaft der Trockenschmierung des Bauteils dadurch gewährleistet, dass in die metallische Matrix eine Gefügephase aus einem Festschmierstoff eingebracht ist. Diese kann beispielsweise aus einer dispersen Verteilung von Festschmierstoffpartikeln bestehen. Diese stehen dann auch an der Oberfläche der Festschmierstoffschicht zur Verfügung und können dort ihre Eigenschaften als Festschmierstoff entfalten.

Auch bei einer Abnutzung der Festschmierstoffschicht kann durch einen gleichmäßigen Füllgrad der Gefügephase in der Festschmierstoffschicht eine ausreichende Schmierung gewährleistet werden, so dass die Festschmierstoffschicht in der metallischen Matrix sozusagen ein Depot an Festschmierstoff zur Verfügung stellt. Hierbei muss berücksichtigt werden, dass die Festschmierstoffschicht gleichzeitig die Funktion einer Stabilisierung zu erfüllen hat. Daraus folgt, dass die Festschmierstoffschicht bei fortschreitendem Verschleiß nicht vollständig abgetragen werden kann, sondern eine Mindestdicke der verbleibenden Festschmierstoffschicht festgelegt werden muss, bei der die mechanische Schutzwirkung für das die Grenzfläche bildende spröde Substrat noch ausreicht.

Die Phase aus dem Festschmierstoff kann vorteilhaft insbesondere in demjenigen Bereich der Festschmierstoffschicht mit hoher Konzentration vorgesehen werden, welcher während des Betriebes abgetragen wird. In dem Bereich, der zur Stabilisierung des Substrates auf der Grenzschicht verbleiben muss, können also weniger oder gar keine Partikel der Gefügephase des Festschmierstoffes vorgesehen sein. Im ersten Fall hätte der Schichtanteil der Festschmierstoffschicht, der an sich auf dem Bauteil verbleiben muss, zumindest Notlaufeigenschaften, wenn ein Austausch des Bauteils nicht sofort möglich ist. Ist der Anteil der Gefügephase des Festschmierstoffes jedoch in diesem Bereich der Schicht vermindert, kann hiermit gleichzeitig die fortschreitende Abnutzung in ihrer Geschwindigkeit vermindert werden, um die mechanische Stabilität des Bauteils noch möglichst lange zu gewährleisten.

Um eine Festschmierstoffschicht mit von der Schichttiefe abhängigen Anforderungsprofil zu erhalten, kann die Festschmierstoffschicht z. B. als Gradientenschicht mit einer zur Gleitfläche hin steigenden Konzentration der verteilten Gefügephase an Festschmierstoffen ausgebildet sein. Ebenso denkbar ist eine Festschmierstoffschicht aus mehreren Lagen (Multilayer-Schicht), wobei die Lage, die die Gleitfläche bildet, den höchsten Anteil an Festschmierstoffen aufweist und die Lage, die direkt auf der Grenzfläche des oxidierten Leichtmetallwerkstoffes liegt, den geringsten Anteil an Festschmierstoff oder überhaupt keinen Festschmierstoff enthält. Zwischen diesen Lagen kann beispielsweise noch eine Lage zur Erzeugung der oben bereits erwähnten Notlaufeigenschaften ausgebildet sein, welche im Vergleich zur gleitflächennahen Lage einen verminderten Anteil an Festschmierstoffen aufweist. Auch können in den unterschiedlichen Lagen unterschiedliche Metalle als metallische Matrix zum Einsatz kommen, die beispielsweise die Abnutzung der grenzschichtnahen Lagen weiter verlangsamen oder aufgrund einer im Vergleich zu den gleitflächennahen Schichten erhöhten Duktilität einer besonders effektive Verteilung der Belastungen auf die durch den oxidierten und gefüllten Leichtmetallwerkstoff gebildete Grenzfläche erlaubt.

Gemäß einer Ausgestaltung der Erfindung ist vorgesehen, dass der Leichtmetallwerkstoff Aluminium oder eine Aluminiumlegierung ist. Dieser Werkstoff zeichnet sich vorteilhaft durch eine hohe Verfügbarkeit und geringe Materialkosten aus. Außerdem ist das Oxidieren von Aluminiumoberflächen beispielsweise durch allgemein bekannte Eloxierbehandlungen weitgehend erforscht und als Prozess gut beherrschbar.

Eine andere Ausgestaltung der Erfindung wird erhalten, wenn der Hartstoff Aluminiumoxid, Siliziumoxid, kubisches Bornitrid, Siliziumkarbid, Titannitrid oder ein Gemisch aus diesen Verbindungen ist. Mit Hilfe des Hartstoffes Aluminiumoxid lässt sich vorteilhaft ein besonders homogener Verband herstellen, wenn als Leichtmetallwerkstoff ebenfalls Aluminium verwendet wird. Die Eloxierungsbehandlung lässt als Stege zwischen den Poren im oxidierten Bereich nämlich ebenfalls Aluminiumoxid entstehen. Mittels der anderen Verbindungen oder Gemische aus allen Verbindungen lassen sich vorteilhaft weiterhin bestimmte Eigenschaftsprofile für den grenzschichtnahen Bereich des Bauteils erzeugen, welche eine Anpassung an unterschiedliche Anwendungsfälle ermöglichen. Dabei sind einerseits die Härte der verwendeten Verbindungen sowie die Möglichkeit, die Sprödheit des erzeugten Verbandes zu beeinflussen, zu beachten.

Vorteilhaft können als Festschmierstoff Molybdänsulfid, Wolframsulfid, Tantalsulfid, Graphit oder ein Gemisch aus diesen Verbindungen verwendet werden. Hierbei handelt es sich vorteilhaft um Festschmierstoffe, die aufgrund ihrer schichtartig aufgebauten Kristallgitter eine hohe Wirkung als Festschmierstoff entwickeln.

Vorteilhaft ist es außerdem, wenn die metallische Matrix der Festschmierstoffschicht eine Nickel und/oder Kobalt enthaltende Legierung ist. Diese weisen insbesondere die für die Festschmierstoffschicht geforderte Duktilität auf, die für einen wirksamen Schutz der Grenzschicht von Nöten ist. Außerdem besitzen diese Metalle und deren Legierungen ein gutes Verschleißverhalten gegenüber dem zu lagernden Bauteil. Das Bauteil kann insbesondere als Lagerschale für ein Gleitlager ausgebildet sein.

Weiterhin bezieht sich die Erfindung auf ein Verfahren zum Erzeugen eines Bauteils mit einer Gleitfläche, welche für die gleitende Lagerung eines anderen Bauteils vorgesehen ist, wobei für das Bauteil ein zumindest teilweise aus einem Leichtmetallwerkstoff bestehender Grundkörper hergestellt wird, dann die Grenzfläche des Leichtmetallwerkstoffes auf der der Gleitfläche zugewandten Seite oxidiert wird, wobei zur Grenzfläche offene Poren entstehen und anschließend die Grenzfläche mit einer Festschmierstoffschicht beschichtet wird. Die genannten Verfahrensschritte sind in dem eingangs bereits genannten Abstract zur JP 05025696-A beschrieben.

Die Aufgabe der Erfindung besteht damit weiterhin darin, ein Verfahren zum Erzeugen eines Bauteils zur gleitenden Lagerung eines anderen Bauteils anzugeben, mit dem sich dieses Bauteil gleichzeitig mit einem vergleichsweise geringen Gewicht und mit einer vergleichsweise hohen mechanischen Festigkeit herstellen lässt.

Diese Aufgabe wird erfindungsgemäß dadurch gelöst, dass bei dem oben angegebenen Verfahren die Poren vor der Beschichtung mit der Festschmierstoffschicht mit einem Hartstoff aufgefüllt werden und die Festschmierstoffschicht als Metalllegierung mit einer metallischen Matrix und einer in dieser verteilten Gefügephase aus einem Festschmierstoff hergestellt wird. Die Vorteile der hierdurch erzeugten Schicht sind weiter oben bereits erläutert worden - insbesondere kann bei Verwendung eines Leichtmetallwerkstoffes die durch diesen gebildete Grenzfläche unter Porenbildung oxidiert werden und gleichzeitig einer genügende mechanische Stabilität erzeugt werden. Dies wird erreicht, indem die Poren der oxidierten Schicht mit einem Hartstoff aufgefüllt werden, wobei dieser Verband aus Hartstoff und oxidiertem Leichtmetallwerkstoff mit einer metallischen, den Trockenschmierstoff tragenden Trockenschmierstoffschicht versehen wird. Dies führt vorteilhaft gleichzeitig zu einem mechanischen Schutz der durch das Substrat gebildeten Grenzschicht.

Gemäß einer Ausbildung des erfindungsgemäßen Verfahrens ist vorgesehen, dass der Hartstoff in Form von Nanopartikeln oder Mikrohohlkugeln in die Poren eingebracht wird. Die Verwendung von Nanopartikeln hat insbesondere bei der Ausbildung von Poren mit Abmessungen im Nanometer-Bereich den Vorteil, dass ein einfaches Auffüllen der Poren möglich ist. Gleichzeitig kann durch Verwendung der Nanopartikel auch der Füllgrad vorteilhaft gesteigert werden, so dass besonders harte und dichte Grenzschichtbereiche auf dem Bauteil entstehen. Die Verwendung von Mikrohohlkugeln hat den Vorteil, dass beim Auffüllen der Poren ein geringerer Füllgrad erreicht wird und gleichzeitig ein vergleichsweise stabiler Werkstoffverbund in Form eines räumlichen Netzes entsteht. Die Verwendung von Mikrohohlkugeln hat weiter den Vorteil, dass eine Steigerung der Festigkeit des Grenzschichtbereiches des Bauteils gewichtssparend auch mit einem geringeren Materialaufwand erreicht werden kann.

Weiterhin kann vorteilhaft vorgesehen werden, dass die Nanopartikel oder Mikrohohlkugeln vor dem Einbringen in die Poren in einem Dispergens mit polaren Eigenschaften dispergiert werden und nach dem Einbringen in die Poren eine thermische Nachbehandlung der verfüllten Proben erfolgt. Mittels der Nachbehandlung kann einerseits das Dispergens aus den Poren ausgetrieben werden. Weiterhin ist es möglich, den Verbund an Nanopartikeln bzw. Mikrohohlkugeln in den Poren mit einer größeren Festigkeit zu versehen.

Beispielsweise kann die thermische Nachbehandlung in einer Sinterbehandlung bestehen. Hierbei werden feste Materialbrücken zwischen den Nanopartikeln oder Mikrohohlkugeln hergestellt. Eine andere Möglichkeit besteht darin, die thermische Nachbehandlung durch eine Beaufschlagung mit Wasserdampf herbeizuführen. Diese Behandlung ist im Rahmen der Nachbehandlung von eloxiertem Aluminium grundsätzlich bekannt und wird in diesem Zusammenhang auch als Wassermethode bezeichnet.

Außerdem ist es vorteilhaft, vor der Nachbehandlung einen Trocknungsschritt durchzuführen. Dieser findet in Temperaturbereichen statt, bei denen lediglich das Dispergens aus den Poren ausgetrieben wird. Damit wird vorteilhaft erreicht, dass dieser Vorgang den Gefüge-Bildungsprozess in den Poren bei der eigentlichen Nachbehandlung nicht stört.

Weitere Einzelheiten der Erfindung werden im Folgenden anhand der Zeichnung erläutert. Gleiche oder sich entsprechende Zeichnungselemente sind in den Figuren mit jeweils den gleichen Bezugszeichen versehen und werden nur insoweit mehrfach erläutert, wie sich Unterschiede zwischen den einzelnen Figuren ergeben. Es zeigen:

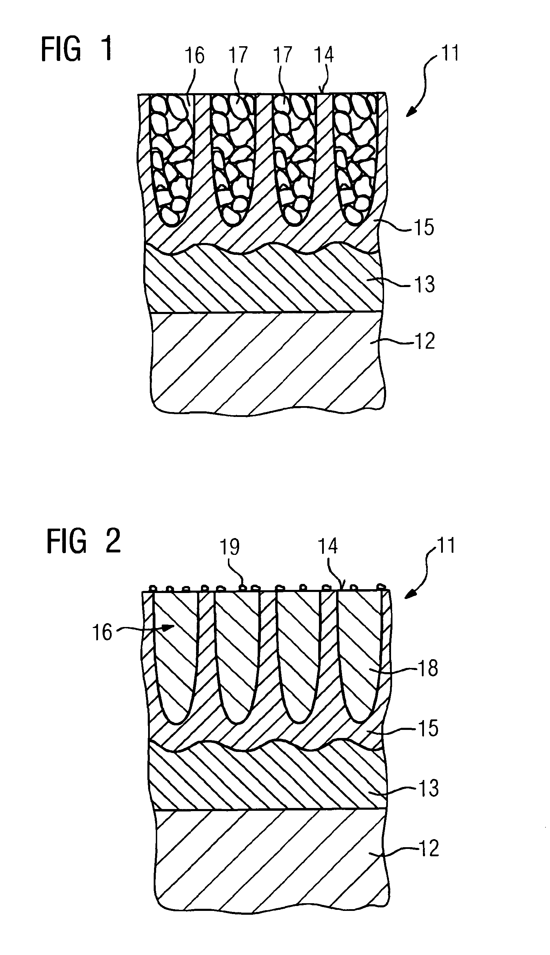

Die Figuren 1 - 3 einen oberflächennahen Ausschnitt eines Ausführungsbeispiels des erfindungsgemäßen Bauteils in unterschiedlichen Verfahrensstadien eines Ausführungsbeispiels des erfindungsgemäßen Verfahrens.

Ein Bauteil 11 gemäß Figur 1 zur Lagerung eines zu lagernden Bauteils besteht aus einem Grundkörper 12, beispielsweise aus Stahl und einer Schicht aus einem Leichtmetallwerkstoff 13, beispielsweise einer Aluminiumlegierung. Diese Aluminiumlegierung ist, ausgehend von einer frei liegenden Grenzfläche 14, durch eine elektrochemische Eloxierungsbehandlung oxidiert worden. Dabei entsteht anschließend an die Grenzfläche 14 eine Oxidschicht 15, beispielsweise aus Aluminiumoxid, in der hin zur Grenzfläche 14 offene Poren 16 ausgebildet sind.

In einem nächsten Verfahrensschritt, der ebenfalls in Figur 1 dargestellt ist, können die Poren 16 mit Nanopartikeln 17 verfüllt werden. Alternativ zu Nanopartikeln können auch Mikrohohlkugeln verwendet werden. Die Nanopartikel bestehen aus einem Hartstoff wie z. B. Bornitrid und können außerdem in einem Dispergens, z. B. einem Alkohol, dispergiert sein. Die so entstandene Dispersion lässt sich einfach in die Poren 16 einbringen.

Figur 2 zeigt das Bauteil 11 nach einer erfolgten Sinter-Wärmebehandlung, mit der einerseits das Dispergens aus den Poren ausgetrieben wurde und andererseits die Nanopartikel zu einem einzigen Materialverbund aus Hartstoff 18 zusammengewachsen sind. Gleichzeitig wird die Haftung dieses Verbundes an den Wänden der Poren 16 erzeugt.

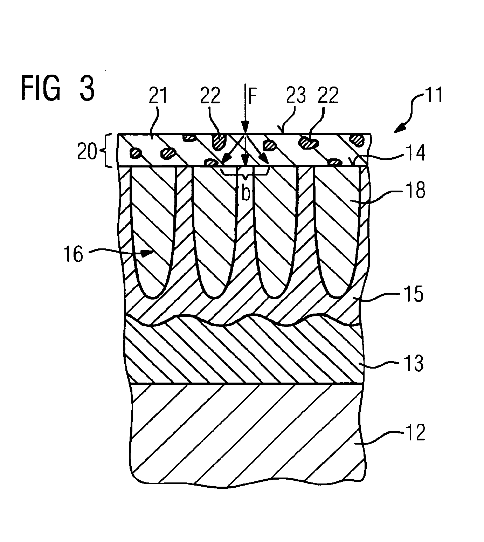

In einem ebenfalls in Figur 2 dargestellten nachfolgenden Schritt wird auf der Grenzfläche 14, die nun durch die Stege zwischen den Poren 16 der Oxidschicht und dem in den Poren befindlichen Hartstoff 18 zusammengesetzt ist, beispielsweise durch Kaltgasspritzen ein elektrisch leitendes Material in Form von Partikeln 19 auf die Grenzschicht aufgebracht. Die elektrische Leitfähigkeit dieses Materials ermöglicht in einem anschließenden Fertigungsschritt gemäß Figur 3 das Aufbringen einer Festschmierstoffschicht 20 auf elektrochemischem Wege. Hierbei entsteht eine metallische Matrix 21, in der eine partikuläre Gefügephase 22 eines Festschmierstoffes eingelagert ist. Die Einlagerung kann beispielsweise dadurch vorgenommen werden, dass dem beim elektrochemischen Beschichten zum Einsatz kommenden Elektrolyt Partikel eines Festschmierstoffes zugeführt und in diesen dispergiert werden. Diese werden dann in der sich ausbildenden Schicht eingebaut.

In Figur 3 dargestellt ist eine gleichmäßige Verteilung der Gefügephase 22 aus Festschmierstoff. Wie bereits erwähnt, können allerdings auch andere Verteilungen, wie z. B. eine mehrlagige Festschmierstoffschicht bzw. eine Gradienten-Festschmierstoffschicht erzeugt werden. Hierbei müssen beispielsweise beim elektrochemischen Beschichten für jede Lage ein anderer Elektrolyt oder ein Elektrolyt mit sich verändernder Konzentration verwendet werden. Beispielsweise könnte eine erste Lage der Festschmierstoffschicht ohne Partikel des Festschmierstoffes aufgebracht werden und in einem zweiten Schritt eine Lage mit dispergierten Festschmierstoffen aufgebracht werden. Eine andere Möglichkeit besteht darin, die Konzentration an dispergiertem Festschmierstoff in dem Elektrolyten bei fortschreitendem Schichtaufbau zu erhöhen.

Bei dem Bauteil 11 gemäß Figur 3 bildet die Festschmierstoffschicht 20 eine Gleitfläche 23 aus, welche beispielsweise ein Gleitlager für ein nicht dargestelltes zu lagerndes Bauteil bilden könnte. Diese Festschmierstoffschicht weist eine duktile Matrix 21 auf, die punktuelle Belastungen F auf einen größeren Bereich b der Grenzfläche 14 verteilt und so die mechanische Belastung auf die spröde mit Hartstoff 18 gefüllte Oxidschicht 15 verringert. Die an der Oberfläche 23 frei liegenden Anteile der Gefügephase 22 des Festschmierstoffes bewirken dabei gute Gleiteigenschaften der Oberfläche 23.

Im Folgenden sollen weitere Angaben zum Herstellungsverfahren für das erfindungsgemäße Bauteil gemacht werden.

Für den Fall, dass als Leichtmetallwerkstoff Aluminium verwendet wird, reicht die Bildung einer Oxidschicht durch die natürliche Passivierung an der Atmosphäre nicht aus. Dies gilt insbesondere für Aluminiumlegierungen. Daher muss die Oberfläche des Aluminiums oder seiner Legierungen in einem geeigneten Elektrolyten eloxiert werden. Das Bauteil wird bei Raumtemperatur oder mit einem gekühlten Elektrolyten unter hoher Stromstärke anodisiert, wodurch ein Harteloxat entsteht. Dieses kann eine Schichtdicke von bis zu 200 µm aufweisen. Außerdem entstehen verfahrensbedingt Poren, deren Abmessungen im Mikro- oder Nanometerbereich liegen können. Als Elektrolyte werden säurehaltige Medien, wie Schwefelsäure, Phosphorsäure, Oxalsäure, Methansulfonsäure oder Gemische aus den genannten Säuren verwendet. Es kann sowohl eine Gleich-oder Wechselspannung angelegt werden. Die Größe der Poren kann durch die Verfahrensparameter, wie Wahl der Säure, Konzentration, Temperatur, Spannung und Zeit in an sich bekannter Weise eingestellt werden.

Anschließend erfolgt ein vollständiges Füllen der Poren mit Nanoteilchen bzw. Mikrohohlkugeln. Diese bestehen aus Siliziumoxid, Aluminiumoxid, Bornitrid, Siliziumcarbid oder Gemischen dieser Verbindungen. Um die Partikel verarbeiten zu können, wird vorher eine Dispersion hergestellt, die je nach Art des Dispersionsmittels und Anteil an Partikeln in der Dispersion als Suspension oder Paste vorliegen kann. Als polare Dispersionsmittel werden flüssige Alkohole verwendet. Der Alkohol kann in einwertiger Form (z. B. Ethanol, Methanol, n-Propanol, n-Butanol) oder in mehrwertiger Form (z. B. Glykol oder Glyzerin) vorliegen. Die mit den funktionellen Gruppen verbundenen Kohlenwasserstoffketten können gerade (z. B. n-Propanol), verzweigt (z. B. Isopropanol) oder ringförmig (z. B. Cyclohexanol) aufgebaut sein. Außerdem können Einfach, Zweifach- und Dreifachbindungen zwischen den Kohlenstoffatomen auftreten.

Weiterhin können als Dispergens aromatische Kohlenwasserstoff-Verbindungen verwendet werden, die einen Benzolring enthalten (z. B. Venyl- oder Naphtyl-Verbindungen). Für die einzelnen Wasserstoffatome in der Kohlenwasserstoffkette können andere Gruppen als Substituenten auftreten (z. B. Alkyl-, Alkenyl-, Alkynyl- oder Aryl-Gruppen). Außerdem kann der Dispersion Wasser zugeführt werden, wodurch sich die Konzentration der anderen Dispergenzien in weitem Umfang einstellen lässt.

Je nach Viskosität der Dispersion kann diese durch Tauchen, Schleudern, Spritzen, Rakeln, Streichen oder Reiben aufgebracht werden.

Wird als Nachbehandlung ein Sintern gewählt, muss in das Bauteil Wärmeenergie eingebracht werden. Zum Einsatz können Infrarot- oder UV-Strahlung oder auch Mikrowellen kommen. Sind nach dem Sintern die Poren noch nicht vollständig gefüllt, so kann der Vorgang eines Einbringens von Dispersion wiederholt erfolgen und anschließend wieder eine Wärmebehandlung durchgeführt werden.

Es ist auch möglich, die Eloxalporen im Aluminium dadurch zu füllen, dass in den Poren Aluminium-, Bor- oder Zirkonsilikat hergestellt wird. Hierzu werden nanoskaliges Aluminium-Zirkon- oder Siliziumoxid in einem Dispergens wie Kieselsäure oder Borsäure in die Poren gegeben. Aus diesen Dispersionen kann nach dem Einbringen in die Eloxalporen durch ein thermisches Sintern Aluminium-, Zirkon- oder Borsilikat entstehen.

Alternativ kann die Nachbehandlung zum Verdichten bzw. zum Schließen der Poren mit Wasser oder Wasserdampf bei 80 bis 100° C erfolgen, wobei als Zusatz beispielsweise eine Amonium-Acetatlösung beigegeben werden kann. Zunächst findet auf der Schichtoberfläche eine Reaktion zwischen dem Aluminiumoxid und dem Wasser statt. Dabei entsteht das wasserreiche Bayerit, welches sich anschließend langsam bei steigender Temperatur in das stabile kristalline Böhmit verwandeln kann. Bei diesem Prozess kommt es durch die Wasseraufnahme im Kristallgitter zu einer Volumenzunahme, die zu einer Verengung der Poren bis hin zu einem Verschluss der Poren führt.

In einem nächsten Schritt wird die duktile Metallschicht aus einer Nickel- oder Nickel-Kobalt-Legierung unter Einlagerung der Festschmierstoffe (z. B. Molybdänsulfid) aufgetragen. Auch dies kann in Form einer Dispersion, durch elektrochemisches Beschichten oder durch Kaltgasspritzen erfolgen.

## Patentansprüche

1. Bauteil mit einer Gleitfläche (23), welche für die gleitende Lagerung eines anderen Bauteils vorgesehen ist, wobei
- das Bauteil zumindest teilweise aus einem Leichtmetallwerkstoff (13) besteht,
- die Grenzfläche (14) des Leichtmetallwerkstoffes (13) auf der der Gleitfläche (23) zugewandten Seite oxidiert ist und mit zur Grenzfläche (14) offenen Poren (16) versehen ist und
- die Grenzfläche (14) mit einer Festschmierstoffschicht (20) versehen ist,
**dadurch gekennzeichnet,**
**dass** die Poren (16) mit einem Hartstoff (18) aufgefüllt sind und auf die Grenzfläche (23) mit den ausgefüllten Poren (16) die Festschmierstoffschicht (20) aus einer Metalllegierung mit einer metallischen Matrix (21) und mit einer in dieser verteilten Gefügephase (22) aus einem Festschmierstoff aufgetragen ist.

2. Bauteil nach Anspruch 1,
**dadurch gekennzeichnet,**
**dass** der Leichmetallwerkstoff (13) Aluminium oder eine Aluminiumbasislegierung ist.

3. Bauteil nach einem der Ansprüche 1 oder 2,
**dadurch gekennzeichnet,**
**dass** der Hartstoff (18) Aluminiumoxid, Siliziumoxid, kubisches Bornitrid, Siliziumcarbid, Titannitrid oder ein Gemisch aus diese Verbindungen ist.

4. Bauteil nach einem der voranstehenden Ansprüche,
**dadurch gekennzeichnet,**
**dass** der Festschmierstoff Molybdänsulfid, Wolframsulfid, Tantalsulfid, Graphit oder ein Gemisch aus diesen Verbindungen ist.

5. Bauteil nach einem der voranstehenden Ansprüche,
**dadurch gekennzeichnet,**
**dass** die metallische Matrix (21) der Festschmierstoffschicht eine Nickel und/oder Kobalt enthaltende Legierung ist.

6. Bauteil nach einem der voranstehenden Ansprüche,
**dadurch gekennzeichnet,**
**dass** dieses eine Lagerschale für ein Gleitlager bildet.

7. Verfahren zum Erzeugen eines Bauteils mit einer Gleitfläche (23), welche für die gleitende Lagerung eines anderen Bauteils vorgesehen ist, wobei
- für das Bauteil ein zumindest teilweise aus einem Leichtmetallwerkstoff (13) bestehender Grundkörper hergestellt wird,
- die Grenzfläche (14) des Leichtmetallwerkstoffes (13) auf der der Gleitfläche (23) zugewandten Seite oxidiert wird, wobei zur Grenzfläche (14) offene Poren (16) entstehen und
- die Grenzfläche (14) mit einer Festschmierstoffschicht (20) beschichtet wird,
**dadurch gekennzeichnet,**
**dass** die Poren (16) vor der Beschichtung mit der Festschmierstoffschicht (20) mit einem Hartstoff (18) aufgefüllt werden, und die Festschmierstoffschicht (20) als Metalllegierung mit einer metallischen Matrix (21) und einer in dieser verteilten Gefügephase (22) aus einem Festschmierstoff hergestellt wird.

8. Verfahren nach Anspruch 7,
**dadurch gekennzeichnet,**
**dass** der Hartstoff (18) in Form von Nanopartikeln oder Mikrohohlkugeln in die Poren (16) eingebracht wird.

9. Verfahren nach Anspruch 8,
**dadurch gekennzeichnet,**
**dass** die Nanopartikel oder Mikrohohlkugeln vor dem Einbringen in die Poren (16) in einem Dispergens mit polaren Eigenschaften dispergiert werden und nach dem Einbringen in die Poren (16) eine thermische Nachbehandlung der verfüllten Poren erfolgt.

10. Verfahren nach Anspruch 9,
**dadurch gekennzeichnet,**
**dass** die thermische Nachbehandlung aus einer Sinterbehandlung besteht.

11. Verfahren nach Anspruch 9,
**dadurch gekennzeichnet,**
**dass** die thermische Nachbehandlung aus einer Beaufschlagung mit Wasserdampf besteht.

12. Verfahren nach einem der Ansprüche 9 bis 11,
**dadurch gekennzeichnet,**
**dass** vor der Nachbehandlung ein Trocknungsschritt durchgeführt wird.

## Claims

1. Component having a sliding surface (23) which is intended for the sliding mounting of another component, wherein
- the component consists at least partially of a light metal material (13),
- the boundary surface (14) of the light metal material (13) is oxidized on the side which faces the sliding surface (23), and is provided with pores (16) which are open toward the boundary surface (14), and
- the boundary surface (14) is provided with a solid lubricant layer (20),
**characterized**
**in that** the pores (16) are filled with a hard material (18), and the solid lubricant layer (20) which is made of a metal alloy and has a metallic matrix (21) and a microstructure phase (22) which is distributed therein and is made of a solid lubricant is applied to the boundary surface (23) with the filled pores (16).

2. Component according to Claim 1,
**characterized**
**in that** the light metal material (13) is aluminum or an aluminum-based alloy.

3. Component according to either of Claims 1 and 2,
**characterized**
**in that** the hard material (18) is aluminum oxide, silicon oxide, cubic boron nitride, silicon carbide, titanium nitride or a mixture of these compounds.

4. Component according to one of the preceding claims, **characterized**
**in that** the solid lubricant is molybdenum sulfide, tungsten sulfide, tantalum sulfide, graphite or a mixture of these compounds.

5. Component according to one of the preceding claims,
**characterized**
**in that** the metallic matrix (21) of the solid lubricant layer is a nickel- and/or cobalt-containing alloy.

6. Component according to one of the preceding claims,
**characterized**
**in that** this component forms a bearing shell for a plain bearing.

7. Process for producing a component having a sliding surface (23) which is intended for the sliding mounting of another component, wherein
- a base body which consists at least partially of a light metal material (13) is produced for the component,
- the boundary surface (14) of the light metal material (13) is oxidized on the side which faces the sliding surface (23), wherein pores (16) which are open toward the boundary surface (14) are produced, and
- the boundary surface (14) is coated with a solid lubricant layer (20),
**characterized**
**in that** the pores (16) are filled with a hard material (18) before coating with the solid lubricant layer (20), and the solid lubricant layer (20) is produced as a metal alloy having a metallic matrix (21) and a microstructure phase (22) which is distributed therein and is made of a solid lubricant.

8. Process according to Claim 7,
**characterized**
**in that** the hard material (18) is introduced into the pores (16) in the form of nanoparticles or micro hollow balls.

9. Process according to Claim 8,
**characterized**
**in that** the nanoparticles or micro hollow balls are dispersed in a dispersant with polar properties before they are introduced into the pores (16) and, after they have been introduced into the pores (16), the filled pores are subjected to subsequent heat treatment.

10. Process according to Claim 9,
**characterized**
**in that** the subsequent heat treatment consists of a sintering treatment.

11. Process according to Claim 9,
**characterized**
**in that** the subsequent heat treatment consists of impingement with steam.

12. Process according to one of Claims 9 to 11,
**characterized**
**in that** the subsequent treatment is preceded by a drying step.

## Revendications

1. Elément ayant une surface ( 23 ) de glissement, qui est prévue pour le montage glissant d'un autre élément, dans lequel
- l'élément est, au moins en partie, en un matériau ( 13 ) de métal léger,
- la surface ( 14 ) limite du matériau ( 13 ) en métal léger est oxydée du côté tourné vers la surface (23 ) de glissement et est pourvue de pores ( 16 ) s'ouvrant vers la surface ( 14 ) limite et
- la surface ( 14 ) limite est pourvue d'une couche ( 20 ) de substance lubrifiante solide,
**caractérisé**
**en ce que** les pores ( 16 ) sont remplis d'une substance ( 18 ) dure et la couche ( 20 ) de substance lubrifiante solide, en un alliage métallique ayant une matrice ( 21 ) métallique et une phase ( 22 ) de structure, qui y est répartie en une substance lubrifiante solide, est déposée sur la surface ( 23 ) limite ayant les pores ( 16 ) remplis.

2. Elément suivant la revendication 1,
**caractérisé**
**en ce que** le matériau ( 13 ) de métal léger est de l'aluminium ou un alliage à base d'aluminium.

3. Elément suivant l'une des revendications 1 ou 2,
**caractérisé**
**en ce que** la substance ( 18 ) dure est de l'oxyde d'aluminium, de l'oxyde de silicium, du nitrure de bore cubique, du carbure de silicium, du nitrure de titane ou un mélange de ces composés.

4. Elément suivant l'une des revendications précédentes,
**caractérisé**
**en ce que** la substance lubrifiante solide est du sulfure de molybdène, du sulfure de tungstène, du sulfure de tantale, du graphite ou un mélange de ces composés.

5. Elément suivant l'une des revendications précédentes,
**caractérisé**
**en ce que** la matrice ( 21 ) métallique de la couche de substance lubrifiante solide est un alliage contenant du nickel et/ou du cobalt.

6. Elément suivant l'une des revendications précédentes,
**caractérisé**
**en ce qu'**il forme une coquille pour un palier lisse.

7. Procédé de production d'un élément ayant une surface ( 23 ) de glissement, qui est prévue pour le montage glissant d'un autre élément, dans lequel
- on produit pour l'élément un corps de base, au moins en partie, en un matériau ( 13 ) de métal léger,
- on oxyde la surface ( 14 ) limite du matériau ( 13 ) en métal léger du côté tourné vers la surface ( 23 ) de glissement, des pores ( 16 ) s'ouvrant vers la surface ( 14 ) limite étant créés et
- on revêt la surface ( 14 ) limite d'une couche ( 20 ) de substance lubrifiante solide,
**caractérisé**
**en ce que** l'on remplit les pores ( 16 ) d'une substance ( 18 ) dure, avant le revêtement par la couche ( 20 ) de substance lubrifiante solide, et on produit la couche ( 20 ) de substance lubrifiante solide sous la forme d'un alliage métallique ayant une matrice ( 21 ) métallique et une phase ( 22 ) de structure qui y est répartie en une substance lubrifiante solide.

8. Procédé suivant la revendication 7,
**caractérisé**
**en ce que** l'on introduit dans les pores ( 16 ) la substance ( 18 ) dure sous la forme de nanoparticules ou de microbilles creuses.

9. Procédé suivant la revendication 8,
**caractérisé**
**en ce que** l'on disperse les nanoparticules ou les microbilles creuses, avant l'introduction dans les pores ( 16 ), dans un dispersant ayant des propriétés polaires et, après l'introduction dans les pores ( 16 ), on effectue un post-traitement thermique des pores remplis.

10. Procédé suivant la revendication 9,
**caractérisé**
**en ce que** le post-traitement thermique consiste en un traitement de frittage.

11. Procédé suivant la revendication 9,
**caractérisé**
**en ce que** le post-traitement thermique consiste en une alimentation en vapeur d'eau.

12. Procédé suivant l'une des revendications 9 à 11,
**caractérisé**
**en ce que** l'on effectue un stade de séchage avant le post-traitement.
